# EUROPEAN PATENT SPECIFICATION

(11) **EP 3 187 419 B1**
(45) Date of publication and mention of the grant of the patent: **16.08.2023**
(21) Application number: 15382679.7
(22) Date of filing: 30.12.2015
(51) Int. Cl.: B64D 13/08, B64F 1/36, B64D 13/06

(54) **AIR CONDITIONING SYSTEM**
KLIMAANLAGENSYSTEM
SYSTÈME DE CLIMATISATION

(43) Date of publication of application: 05.07.2017
(73) Proprietor: Airbus Operations S.L., 28906 Getafe (Madrid) (ES)
(72) Inventor: CASADO MONTERO, Carlos, E-28906 Getafe, Madrid (ES)
(74) Representative: ABG Intellectual Property Law, S.L.

(56) References cited:
- EP-A1- 1 247 739
- EP-A1- 1 424 282
- EP-A1- 2 947 012
- US-A- 4 312 191
- US-B1- 6 568 203

## Description

### TECHNICAL FIELD OF THE INVENTION

The present invention is related to the field of aircraft systems, in particular to the field of air conditioning systems.

### BACKGROUND OF THE INVENTION

The cabin of a modern passenger aircraft is air-conditioned usually both when the aircraft is flying and is on the ground by means of the aircraft's own air conditioning system. The aircraft air conditioning system is supplied with pressurized bleed air which is taken from an engine compressor, the Auxiliary Power Unit compressor or by an external source.

This air passes through one or several heat exchangers in order to cool it to a desired low temperature. The conditioned air is then properly treated and introduced in the cabin at the proper temperature and pressure.

For the working of this kind of air conditioning system in the state of art, some cooling air needed to reduce the temperature of the air obtained in the compressor or the APU and in the following air compression steps within the air conditioning system. This cooling air was usually obtained from the ambient air. However, in some conditions (usually on ground), the ambient air speed is zero or almost zero. This ambient air speed is not sufficient to allow the moving of the air along the heat exchanging system, in order to reduce the temperature of the compressed or pressurized air. For this purpose, it is usual to install a fan, which is usually driven by the own air conditioning system. However, this fan is a main noise source when the aircraft is parked and the Environmental Control System (ECS) is running.

Document US6568203 discloses a system and method of supplying temperature-controlled air to an aircraft environmental control system during ground support operations that uses an air amplifier to control the flow rate of cooling air through a heat exchanger. Document US 4,312,191 A constitutes a further document illustrating the prior art.

### SUMMARY OF THE INVENTION

The present invention provides an aircraft according to appended claim 1. The dependent claims define preferred embodiments of the invention.

The invention provides an aircraft comprising an air conditioning system for a cabin of the aircraft, the air conditioning system comprising: a pressurized air source which, when in its air operative mode, is configured to provide work air with a pressure higher than 60 kPa; and when in its air ground mode, is configured to provide work air with a pressure higher than 100 kPa; a ram air duct, in fluid connection with ambient air, comprising a first cross section where a boundary of the first cross section is defined; an air amplifier comprising an inlet for work air, a slot suitable for letting the work air exit the air amplifier towards the ram air duct, and a main fluid zone, the inlet being in fluid communication with the pressurized air source for receiving the work air from the pressurized air source, and the slot being arranged at the first cross section of the ram air duct in fluid communication with the ram air duct, and being configured to receive the work air and to exhaust this work air in the ram air duct by means of making the work air flows by a surface, in such a way that the work air exiting from the slot produces a suction effect in the ambient air in such a way that this ambient air flows along the ram air duct; an air distribution and control system, with an inlet and an outlet; a heat exchanger with a cold side and a hot side, the cold side comprising an inlet and an outlet and the hot side comprising an inlet and an outlet; wherein the air amplifier is arranged so that the ambient air is forced by the suction effect to pass from the inlet to the outlet of the cold side of the heat exchanger; wherein the outlet of the hot side of the heat exchanger is in fluid communication with one inlet of the air distribution and control system, at least one outlet of which is in turn in fluid communication with the cabin; wherein the air amplifier is arranged in the first cross section of the ram air duct upstream the inlet of the cold side of the heat exchanger, and wherein the slot is arranged in the boundary of the first cross section.

This air conditioning system of the invention is able to use the ambient air when the aircraft is on ground, despite in this conditions the air speed may be zero or almost zero.

In the context of this application, it will be understood that the air operative mode of the pressurized air source refers to the mode when the aircraft is in flight.

The air amplifier is arranged in the first cross section of the ram air duct upstream the inlet of the cold side of the heat exchanger.

This configuration of the air conditioning system provides a better efficiency in the operation of the air amplifier.

The slot is arranged in the boundary of the first cross section.

In a configuration that is not claimed, the slot is arranged at a certain distance from the boundary of the first cross section.

This configuration of the air conditioning system allows air to enter the system both in the main fluid zone and outside the main fluid zone, thus improving the air feeding under certain conditions.

In a particular embodiment, the slot is continuous. In another particular embodiment, the slot comprises discontinuities.

In a configuration that is not claimed, the air amplifier is arranged downstream the inlet of the cold side of the heat exchanger.

In this configuration of the air conditioning system, the hot air used to operate the air amplifier is not mixed with the ambient air used to cool the work air, so the cooling power of the ambient air is greater.

In a particular embodiment, the pressurized air source is one of at least an APU or a bleed duct from one or several engine compressors. In other embodiments, the pressurized air source is an air compressor or comes from a pressurized air ground connection.

The pressurized air source is also configured to provide air to the inlet of the hot side of the heat exchanger.

In a particular embodiment, the heat exchanger is comprised in an air cycling machine which further comprises at least a turbine, a compressor and a secondary heat exchanger.

### DESCRIPTION OF THE DRAWINGS

These and other characteristics and advantages of the invention will be clearly understood in view of the detailed description of the invention and further in view of the preferred embodiments of the invention, with reference to the drawings. Preferred embodiments are given just as examples and are not intended to limit the scope of the present invention.
- Figure 1: This figure shows a side view of a first embodiment of an air conditioning system according to the invention.
- Figure 2: This figure shows a detail view of the air amplifier of an air conditioning system according to the invention.
- Figure 3: This figure shows a general view of an alternative arrangement that is not claimed.
- Figures 4a-4d: These figures show different configurations for the first cross section of the ram air duct.

### DETAILED DESCRIPTION OF THE INVENTION

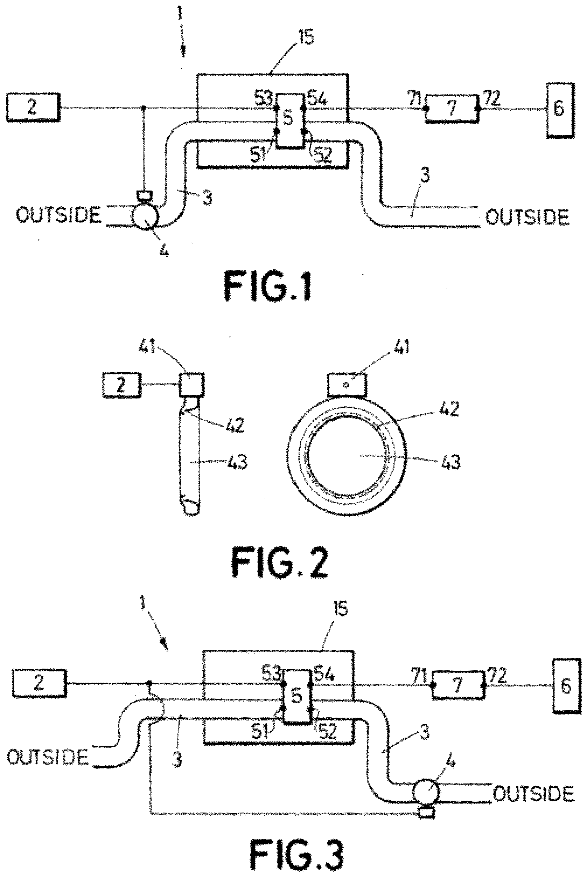

Figure 1 shows a general view of a particular embodiment of an air conditioning system (1) for a cabin (6) of an aircraft. This air conditioning system (1) comprises:
a pressurized air source (2);
a ram air duct (3), in fluid connection with ambient air, comprising a first cross section where a boundary of the first cross section is defined;
an air amplifier (4)
an air distribution and control system (7), with an inlet (71) and an outlet (72);
a heat exchanger (5) with a cold side and a hot side, the cold side comprising an inlet (51) and an outlet (52) and the hot side comprising an inlet (53) and an outlet (54);

wherein the air amplifier (4) is arranged so that the ambient air is forced by the suction effect to pass from the inlet (51) to the outlet (52) of the cold side of the heat exchanger (5);
wherein the outlet (54) of the hot side of the heat exchanger (5) being suitable for being in fluid communication with the inlet (71) of the air distribution and control system (7), the outlet (72) of which is in turn in fluid communication with the cabin (6).

In this embodiment, the pressurized air source (2) is one of APU or a bleed duct from one or several engine compressors. In this way, pressurized air is obtained to operate the air conditioning system (1) of the invention. In other embodiments, the pressurized air source is an air compressor or comes from a pressurized air ground connection.

The pressurized air source (2) provides air which needs to be at a higher pressure than the ambient air, whatever ambient pressure is.

When the aircraft is on cruise mode, the pressurized air source (2) is in its air operative mode, and hence provides work air with a pressure higher than 60 kPa. This pressure is enough to operate the air amplifier (4) in these conditions.

But when the aircraft is on ground, ambient pressure is higher, and work air is needed at a higher pressure. As a consequence, the pressurized air source (2) works in its air ground mode, and provides work air with a pressure higher than 100 kPa. This way of operation is similar when the aircraft is at low altitude with low speed, when the air may enter the ram air duct (3) with some speed but an additional pressure difference may be needed to be supplied by the air amplifier (4).

In this figure, the pressurized air source (2) is also configured to provide air to the inlet (53) of the hot side of the heat exchanger (5).

In this figure, the heat exchanger (5) is comprised in an air cycling machine (15) which further comprises at least a turbine, a compressor and a secondary heat exchanger.

In this figure, the air amplifier (4) is arranged in the first cross section of the ram air duct (3) upstream the inlet of the cold side of the heat exchanger.

Figure 2 shows a detail view of the air amplifier (4). In this figure, it the air amplifier (4) comprises an inlet (41) for work air, a slot (42) suitable for letting the work air exit the air amplifier, and a main fluid zone (43). The inlet (41) is in fluid communication with the pressurized air source (2), thus receiving the work air from it, and the slot (42) which receives the work air exhausts this work air in the ram air duct (3). The slot (42) is arranged in such a way that the work air exiting from the slot (42) produces a suction effect in the ambient air in such a way that this ambient air flows along the ram air duct (3). In this figure, this suction effect is caused because the slot (42) makes the work air flow by a surface which accelerates it, and consequently makes its pressure lower. This generates an underpressure which produces the suction effect in the ambient air, making it enter the ram air duct (3).

Figure 3 shows a general view of an alternative arrangement of an air conditioning system (1). In this alternative arrangement, the air amplifier (4) is arranged downstream the inlet (51) of the cold side of the heat exchanger (5).

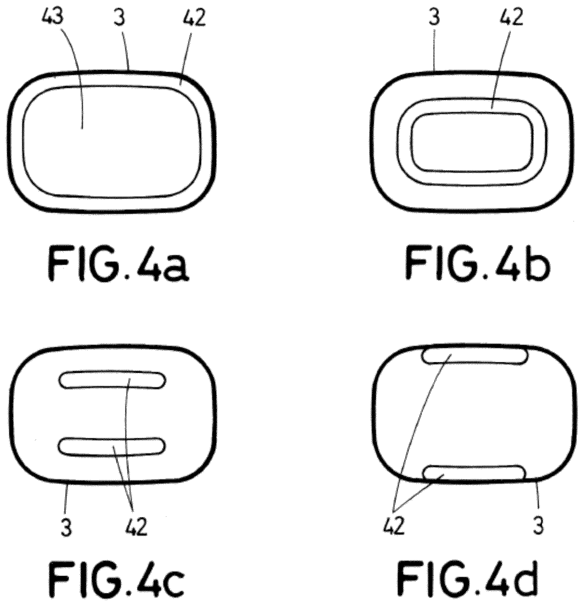

Figures 4a-4d show different alternatives for the first cross section of the ram air duct. In each alternative, the slot (42) of the air amplifier is arranged in different ways at the first cross section of the ram air duct (3).

Figure 4a shows the first cross section of the ram air duct, where the slot (42) is arranged in the boundary of the first cross section. In such a configuration, the main fluid zone (43) is a closed area which substantially coincides with the area of the first cross section of the ram air duct (3).

Figure 4b shows the first cross section of the ram air duct, where the slot (42) is arranged at a certain distance from the boundary of the first cross section. In such a configuration, the main fluid zone (43) is a closed area which is smaller than the area of the first cross section of the ram air duct (3).

In these two configurations, shown in figures 4a-4b, the slot (42) is continuous. But in figures 4c-4d, the slot (42) comprises discontinuities. Figure 4c shows a configuration which is similar to the one shown in Figure 4b, but the slot (42) comprising discontinuities. Figure 4d shows an embodiment which is similar to the one shown in Figure 4a, but the slot (42) comprising discontinuities.

## Claims

1. Aircraft comprising an air conditioning system (1) for a cabin (6) of the aircraft, the air conditioning system (1) comprising:
a pressurized air source (2) which, when in its air operative mode, is configured to provide work air with a pressure higher than 60 kPa; and when in its air ground mode, is configured to provide work air with a pressure higher than 100 kPa;
a ram air duct (3), in fluid connection with ambient air, comprising a first cross section where a boundary of the first cross section is defined;
an air amplifier (4) comprising an inlet (41) for work air, a slot (42) suitable for letting the work air exit the air amplifier (4) towards the ram air duct (3), and a main fluid zone (43), the inlet (41) being in fluid communication with the pressurized air source (2) for receiving the work air from the pressurized air source (2), and the slot (42) being arranged at the first cross section of the ram air duct (3) in fluid communication with the ram air duct (3), and being configured to receive the work air and to exhaust this work air in the ram air duct (3) by means of making the work air flows by a surface, in such a way that the work air exiting from the slot (42) produces a suction effect in the ambient air in such a way that this ambient air flows along the ram air duct (3);
an air distribution and control system (7), with an inlet (71) and an outlet (72);
a heat exchanger (5) with a cold side and a hot side, the cold side comprising an inlet (51) and an outlet (52) and the hot side comprising an inlet (53) and an outlet (54);
wherein the air amplifier (4) is arranged so that the ambient air is forced by the suction effect to pass from the inlet (51) to the outlet (52) of the cold side of the heat exchanger (5);
wherein the outlet (54) of the hot side of the heat exchanger (5) is in fluid communication with one inlet (71) of the air distribution and control system (7), at least one outlet (72) of which is in turn in fluid communication with the cabin (6);
wherein the air amplifier (4) is arranged in the first cross section of the ram air duct (3) upstream the inlet of the cold side of the heat exchanger, and
wherein the slot (42) is arranged in the boundary of the first cross section.

2. Aircraft comprising an air conditioning system (1) according to claim 1, wherein the slot (42) is continuous.

3. Aircraft comprising an air conditioning system (1) according to claim 1, wherein the slot (42) comprises discontinuities.

4. Aircraft comprising an air conditioning system (1) according to any of the preceding claims, wherein the pressurized air source (2) is one of at least an APU or a bleed duct from one or several engine compressors or an air compressor or a pressurized air ground connection.

5. Aircraft comprising an air conditioning system (1) according to any of the preceding claims, wherein the heat exchanger (5) is comprised in an air cycling machine (15) which further comprises at least a turbine, a compressor and a secondary heat exchanger.

## Patentansprüche

1. Luftfahrzeug, umfassend ein Klimaanlagensystem (1) für eine Kabine (6) des Luftfahrzeugs, wobei das Klimaanlagensystem (1) Folgendes umfasst:
eine Druckluftquelle (2), die, wenn sie sich in ihrem Luftbetriebsmodus befindet, dazu ausgelegt ist, Arbeitsluft mit einem Druck von über 60 kPa bereitzustellen; und wenn sie sich in ihrem Luftbodenmodus befindet, dazu ausgelegt ist, Arbeitsluft mit einem Druck von über 100 kPa bereitzustellen;
einen Stauluftkanal (3), der in Fluidverbindung mit Umgebungsluft steht, der einen ersten Querschnitt umfasst, wobei eine Grenze des ersten Querschnitts definiert ist;
einen Luftverstärker (4), der einen Einlass (41) für Arbeitsluft, einen Schlitz (42), der dazu geeignet ist, die Arbeitsluft aus dem Luftverstärker (4) hin zu dem Stauluftkanal (3) auszulassen, und eine Hauptfluidzone (43) umfasst, wobei der Einlass (41) in Fluidverbindung mit der Druckluftquelle (2) steht, um die Arbeitsluft aus der Druckluftquelle (2) aufzunehmen, und der Schlitz (42) an dem ersten Querschnitt des Stauluftkanals (3) in Fluidverbindung mit dem Stauluftkanal (3) angeordnet und dazu ausgelegt ist, die Arbeitsluft aufzunehmen und die Arbeitsluft in den Stauluftkanal (3) auszustoßen, indem die Arbeitsluft veranlasst wird, derart an einer Fläche vorbei zu strömen, dass die aus dem Schlitz (42) austretende Arbeitsluft eine Sogwirkung in der Umgebungsluft derart erzeugt, dass die Umgebungsluft entlang des Stauluftkanals (3) strömt;
ein Luftverteilungs- und Steuersystem (7) mit einem Einlass (71) und einem Auslass (72);
einen Wärmetauscher (5) mit einer Kaltseite und einer Warmseite, wobei die Kaltseite einen Einlass (51) und einen Auslass (52) umfasst und die Warmseite einen Einlass (53) und einen Auslass (54) umfasst;
wobei der Luftverstärker (4) derart angeordnet ist, dass die Umgebungsluft durch die Sogwirkung gezwungen wird, von dem Einlass (51) zu dem Auslass (52) der Kaltseite des Wärmetauschers (5) zu strömen;
wobei der Auslass (54) der Warmseite des Wärmetauschers (5) in Fluidverbindung mit einem Einlass (71) des Luftverteilungs- und Steuersystems (7) steht, von dem mindestens ein Auslass (72) wiederum in Fluidverbindung mit der Kabine (6) steht;
wobei der Luftverstärker (4) in dem ersten Querschnitt des Stauluftkanals (3) stromaufwärts des Einlasses der Kaltseite des Wärmetauschers angeordnet ist, und
wobei der Schlitz (42) in der Grenze des ersten Querschnitts angeordnet ist.

2. Luftfahrzeug, umfassend ein Klimaanlagensystem (1) nach Anspruch 1, wobei der Schlitz (42) durchgehend ist.

3. Luftfahrzeug, umfassend ein Klimaanlagensystem (1) nach Anspruch 1, wobei der Schlitz (42) Unterbrechungen umfasst.

4. Luftfahrzeug, umfassend ein Klimaanlagensystem (1) nach einem der vorhergehenden Ansprüche, wobei die Druckluftquelle (2) eines von mindestens einem Hilfstriebwerk oder einem Entlüftungskanal von einem oder mehreren Triebwerkskompressoren oder einem Luftkompressor oder einer Druckluftbodenverbindung ist.

5. Luftfahrzeug, umfassend ein Klimaanlagensystem (1) nach einem der vorhergehenden Ansprüche, wobei der Wärmetauscher (5) in einer Luftumwälzmaschine (15) enthalten ist, die ferner mindestens eine Turbine, einen Kompressor und einen sekundären Wärmetauscher umfasst.

## Revendications

1. Aéronef, comprenant un système de conditionnement d'air (1) pour une cabine (6) de l'aéronef, le système de conditionnement d'air (1) comprenant :
une source d'air sous pression (2) qui, lorsqu'elle est dans son mode d'exploitation air, est configurée pour fournir un air de fonctionnement avec une pression supérieure à 60 kPa ; et lorsqu'elle est dans son mode air-sol, est configurée pour fournir de l'air de fonctionnement avec une pression supérieure à 100 kPa ;
un conduit d'air dynamique (3), en raccordement fluidique avec de l'air ambiant, comprenant une première section transversale où une limite de la première section transversale est définie ;
un amplificateur d'air (4) comprenant une entrée (41) pour de l'air de fonctionnement, une fente (42) appropriée pour laisser l'air de fonctionnement sortir de l'amplificateur d'air (4) vers le conduit d'air dynamique (3), et une zone fluidique principale (43), l'entrée (41) étant en communication fluidique avec la source d'air sous pression (2) pour recevoir l'air de fonctionnement à partir de la source d'air sous pression (2), et la fente (42) étant agencée à la première section transversale du conduit d'air dynamique (3) en communication fluidique avec le conduit d'air dynamique (3), et étant configurée pour recevoir l'air de fonctionnement et pour évacuer cet air de fonctionnement dans le conduit d'air dynamique (3) en faisant en sorte que l'air de fonctionnement s'écoule à côté d'une surface, de manière telle que l'air de fonctionnement sortant de la fente (42) produise un effet d'aspiration dans l'air ambiant de manière telle que cet air ambiant s'écoule le long du conduit d'air dynamique (3) ;
un système de distribution et de régulation d'air (7), avec une entrée (71) et une sortie (72) ;
un échangeur de chaleur (5) avec un côté froid et un côté chaud, le côté froid comprenant une entrée (51) et une sortie (52) et le côté chaud comprenant une entrée (53) et une sortie (54) ;
dans lequel l'amplificateur d'air (4) est agencé pour que l'air ambiant soit forcé, par l'effet d'aspiration, de passer de l'entrée (51) à la sortie (52) du côté froid de l'échangeur de chaleur (5) ;
dans lequel la sortie (54) du côté chaud de l'échangeur de chaleur (5) est en communication fluidique avec une entrée (71) du système de distribution et de régulation d'air (7), dont au moins une sortie (72) est à son tour en communication fluidique avec la cabine (6) ;
dans lequel l'amplificateur d'air (4) est agencé dans la première section transversale du conduit d'air dynamique (3) en amont de l'entrée du côté froid de l'échangeur de chaleur, et
dans lequel la fente (42) est agencée dans la limite de la première section transversale.

2. Aéronef comprenant un système de conditionnement d'air (1) selon la revendication 1, dans lequel la fente (42) est continue.

3. Aéronef comprenant un système de conditionnement d'air (1) selon la revendication 1, dans lequel la fente (42) comprend des discontinuités.

4. Aéronef comprenant un système de conditionnement d'air (1) selon l'une quelconque des revendications précédentes, dans lequel la source d'air sous pression (2) est un parmi au moins un GAP ou une conduite de prélèvement d'un ou de plusieurs compresseurs de moteur ou un compresseur d'air ou un raccord air-sol sous pression.

5. Aéronef comprenant un système de conditionnement d'air (1) selon l'une quelconque des revendications précédentes, dans lequel l'échangeur de chaleur (5) est compris dans un groupe turborefroidisseur (15) qui comprend en outre au moins une turbine, un compresseur et un échangeur de chaleur secondaire.
